# EUROPÄISCHE PATENTSCHRIFT

(11) **EP 0 589 469 B1**
(45) Veröffentlichungstag und Bekanntmachung des Hinweises auf die Patenterteilung: **29.12.1997**
(21) Anmeldenummer: 93115429.8
(22) Anmeldetag: 24.09.1993
(51) Int. Cl.: D04H 1/42, D04H 1/64

(54) **Verfahren zum Herstellen einer Isoliermatte**
Process for manufacturing an insulating web
Procédé pour fabriquer un matelas isolant

(30) Priorität: 24.09.1992 DE 4231916
(43) Veröffentlichungstag der Anmeldung: 30.03.1994
(73) Patentinhaber: HOLSTEIN FLACHS GmbH, D-23795 Weede-Mielsdorf (DE)
(72) Erfinder: Borsum, Dietrich, D-24107 Quarnbek (DE); Bretthauer, Jens, D-24220 Flintbek (DE); Thiessen, Johann Hinrich, D-24558 Henstedt-Ulzburg (DE)
(74) Vertreter: Tönnies, Jan G., Dipl.-Ing.

(56) Entgegenhaltungen:
- WO-A-91/08332
- DE-A- 2 451 206
- DE-A- 2 510 911
- FR-A- 2 202 970
- US-A- 3 837 903

## Beschreibung

Die Erfindung betrifft ein Verfahren zum Herstellen einer aus Flachsfasern gebildeten Isoliermatte.

Aus der GB 2 209 352 A ist eine Isoliermatte bekannt, die aus einem Jutefaservlies gebildet ist. In der DE-Z Chemiefaser/Textilindustrie, Januar 1981, S. 57 bis 60 wird die Möglichkeit der Zugabe von Brandschutzmitteln erläutert. In der DE-GM 73 34 348 wird die Zugabe eines Bindemittels zu einem Faservlies vorgeschlagen.

Weiter ist die FR-A-2 202 970 zu nennen, in der ein Verpackungsmaterial aus Flachsfasern beschrieben wird, das durch ein Bindemittel jedoch derart eng zusammengefaßt ist, daß sich insbesondere bei Verstärkung durch Fäden eine pappkartonartige Struktur ohne wesentlichen Lufteinschluß bildet. Eine dort beschriebene Wärmebehandlung dient zur Polymerisation der Fasern selbst.

Aufgabe der vorliegenden Anmeldung ist die Schaffung eines Verfahrens, das die Herstellung einer aus Flachsfasern bestehenden und damit bauökologisch unbedenklichen Isoliermatte erlaubt, bei dem ein Brandschutzmittel so gleichförmig über die Flachsfasern verteilt ist, daß ein hoher Brandschutzwert erreicht wird.

Erfindungsgemäß wird diese Aufgabe gelöst durch ein Verfahren zum Herstellen eines aus Flachsfasern mit einem Bindemittel fixierten Materials, gelöst, mit
- Bilden eines als Isoliermatte ausgelegten Flachsfaservlieses in einem Wirrvliesbildner,
- Zugeben von Borsalz oder Harnstoffphosphat und Stärke, die durch Beaufschlagung mit Wasserdampf aktiviert wird, vor oder während der Vliesbildung zur homogenen Verteilung,
- Aktivierung der Stärke vor oder während der Vliesbildung zur Bildung eines Films um die Flachsfasern, der diesen die anwendungsgerechte Festigkeit verleiht, und
- Beaufschlagen des Vlieses mit einem Aktivator nach der Vliesbildung, um dem Flies die erforderliche Formstabilität zu geben.

Stärke hat sich als vorteilhafter Kleber erwiesen, wobei der Aktivator Wasserdampf ist.

Bei der vorgeschlagene Zugabe eines Gemisches aus dem Brandschutzmittel und dem Kleber zu dem Vlies - während der in einem Ganzvliesbildner erfolgenden Vliesbildung selbst - kann dieses sehr homogen über die Flachsfasern verteilt werden.

Bei einer Wahl von Stärke als Kleber wird diese dem Vlies in einer auf das Gewicht des Vlieses bezogenen Menge von vorzugsweise 15 bis 20 % vor oder während der Vliesbildung in einem Wirrvliesbildner als pulverförmiges Gemisch mit dem Brandschutzmittel zugegeben. Durch die Beaufschlagung mit Wasserdampf werden die wasserlöslichen Bestandteile des Gemisches gelöst, wodurch die Flachsfasern gleichförmig und im wesentlichen vollständig mit einem Film, der aus dem Klebstoff und dem Brandschutzmittel besteht, beschichtet werden. Der Klebstoff gibt dem Vlies weiter die anwendungsgerechte Festigkeit.

Dabei hat die Stärke die Funktion, nach der Aktivierung zum einen das Brandschutzmittel zu fixieren, zum anderen aber dem Vlies die erforderliche Elastizität und Formstabilität zu geben.

Durch die Verwendung eines Borsalzes als Brandschutzmittel werden überraschend hohe Brandschutzwerte erreichbar sind. Das Borsalz ist weiter verrottungshemmend.

Alternativ kommt als Brandschutzmittel auch Harnstoffphosphat in Betracht.

## Patentansprüche

1. Verfahren zum Herstellen eines aus Flachsfasern mit einem Bindemittel fixierten Materials, gekennzeichnet durch
- Bilden eines als Isoliermatte ausgelegten Flachsfaservlieses in einem Wirrvliesbildner,
- Zugeben von Borsalz oder Harnstoffphosphat und Stärke, die durch Beaufschlagung mit Wasserdampf aktiviert wird, vor oder während der Vliesbildung zur homogenen Verteilung,
- Aktivierung der Stärke vor oder während der Vliesbildung zur Bildung eines Films um die Flachsfasern, der diesen die anwendungsgerechte Festigkeit verleiht, und
- Beaufschlagen des Vlieses mit einem Aktivator nach der Vliesbildung, um dem Flies die erforderliche Formstabilität zu geben.

## Claims

1. Process for producing a material of flax fibres fixed with a binder, characterized by
- the formation of a flax nonwoven web in the form of an insulating mat in a random web former,
- adding boron salt or urea phosphate and starch activated by a supply of water vapour before or during web formation for homogeneous distribution,
- activation of the starch before or during web formation for forming a film round the flax fibres giving them the appropriate strength and
- supplying an activator to the web following the formation of the latter, so as to give the web the necessary dimensional stability.

## Revendications

1. Procédé servant à produire un matériau composé de fibres de lin fixé à l'aide d'un liant, caractérisé par
- la formation d'une toison de fibres de lin, sous la forme d'un tapis isolant, dans un formateur de fibres emmêlées,
- l'addition de sel boriqué ou de d'urée de phosphate et d'un empois activé par l'apport de vapeur d'eau avant ou durant la formation des firbres pour la distribution homogène
- activation de l'empois avant ou durant la formation de la toison pour former un film autour des fibres de lin qui leur confère la solidité appropriée et
- apport d'un activateur recouvrant la toison après la formation de la toison afin de conférer la stabilité dimensionnelle requise à la toison.
